# EUROPÄISCHE PATENTSCHRIFT

(11) **EP 0 974 559 B1**
(45) Veröffentlichungstag und Bekanntmachung des Hinweises auf die Patenterteilung: **05.06.2002**
(21) Anmeldenummer: 99114424.7
(22) Anmeldetag: 22.07.1999
(51) Int. Cl.: C03C 8/24, C03C 14/00

(54) **Komposit-Lotglas mit niedriger Aufschmelztemperatur, ein Füllstoff hierfür, sowie deren Verwendung**
Low melting point composite glass solder, its filler component, as well as its uses
Verre de soudure composite à bas point de fusion, sa matière de charge et son utilisation

(30) Priorität: 23.07.1998 DE 19833252
(43) Veröffentlichungstag der Anmeldung: 26.01.2000
(73) Patentinhaber: Schott Glas, 55122 Mainz (DE); Carl-Zeiss-Stiftung trading as Schott Glas, 55122 Mainz (DE)
(72) Erfinder: Siebers, Friedrich, Dr., 55283 Nierstein (DE); Mund, Dietrich, 84101 Obersüssbach (DE); Paschke, Hartmut, Dr., 84030 Ergolding (DE); Beudt, Hans-Werner, 65187 Wiesbaden (DE)
(74) Vertreter: Fuchs Mehler Weiss & Fritzsche, Patentanwälte

(56) Entgegenhaltungen:
- PATENT ABSTRACTS OF JAPAN vol. 002, no. 092 (E-046), 28. Juli 1978 (1978-07-28) & JP 53 057499 A (TOSHIBA CORP), 24. Mai 1978 (1978-05-24)
- PATENT ABSTRACTS OF JAPAN vol. 002, no. 092 (E-046), 28. Juli 1978 (1978-07-28) & JP 53 057498 A (TOSHIBA CORP), 24. Mai 1978 (1978-05-24)
- PATENT ABSTRACTS OF JAPAN vol. 002, no. 092 (E-046), 28. Juli 1978 (1978-07-28) & JP 53 057497 A (TOSHIBA CORP), 24. Mai 1978 (1978-05-24)

## Beschreibung

Die Erfindung betrifft ein Komposit-Lotglas mit niedriger Aufschmelztemperatur sowie einen Füllstoff hierfür der dotiertes Bleititanat enthält. Die erhaltenen Komposit-Lotgläser sind zum hermetischen Abdichten, Löten und Beschichten von Einzelteilen aus Glas, Glaskeramik, Keramik und Metall geeignet und finden bevorzugt Anwendung für Geräte und Komponenten in der Elektrotechnik und Elektronik. Die Erfindung betrifft auch ein Verfahren zur Herstellung solcher Komposit-Lotgläser und der Füllstoffe.

Ganz allgemein besteht ein Komposit-Lotglas aus einer Pulvermischung, die ein Lotglaspulver mit niedriger Schmelztemperatur und ein im wesentlichen inertes Füllstoffpulver zur Einstellung der thermischen Ausdehnung enthält. Übliche Lotglaspulver enthalten PbO und B₂O₃ als Hauptbestandteile, fallweise werden ZnO, F, SiO₂. Al₂O₃, Bi₂O₃ und weitere übliche Glaskomponenten eingesetzt. Andere niedrigschmelzende Lotglaspulver basieren auf PbO, V₂O₅, TeO₂ oder auf anderen Glassystemen. PbO-B₂O₃-Lotgläser haben im allgemeinen eine thermische Ausdehnung von etwa 9 bis 12 x 10⁻⁶/K, gemessen im Temperaturbereich zwischen Raumtemperatur und 300°C. Die niedrigen Aufschmelztemperaturen sind gewünscht, um die thermische Belastung der zu verbindenden bzw. zu beschichtenden Elemente gering zu halten und um die Prozeßzeiten von der Maximaltemperatur bis zum Abkühlen auf Raumtemperatur zu verkürzen. Während des Aufschmelzens kommt es auch zur Verflüchtigung organischer Hilfsstoffe, die z. B. als Suspendiermittel für den Auftrag des Komposit-Lotglases eingesetzt werden. Das Füllstoffpulver besteht aus einem oder mehreren Füllstoffen, die sich gegenüber dem Lotglaspulver im wesentlichen inert verhalten sollen, damit es nicht zu schädlichen Wechselwirkungen wie z. B. Auflösung des Füllstoffs durch das Lotglas, einer Gasfreisetzung oder zu einer unkontrollierten Kristallisation des Lotglases kommt. Übliche Füllstoffe zur Absenkung der thermischen Ausdehnung des Komposit-Lotglases sind z. B. β-Eukryptit, Cordierit, Mullit, Willemit, Zirkon, Aluminiumoxid und/oder Bleititanat. Die Auswahl des Füllstoffs hängt auch von der beabsichtigten Anwendung ab. Wenn hohes elektrisches Isolationsvermögen gefordert ist, werden üblicherweise alkali-haltige Füllstoffe, wie z. B. β-Eukryptit vermieden. Weitere Beschreibung von Zusammensetzung, Eigenschaften und Verwendung von Glasloten ist "GLASS SCIENCE AND TECHNOLOGY", UHLMANN, N.J. KREIDL; Chapter 6; S. 169-207; Copyright 1984 by Academic Press. Inc.; "Glaslote", G. Müller, in Glashütten-Handbuch, Z101/1-6, Copyright 1975 durch Hüttentechnische Vereinigung der Deutschen Glasindustrie; Engineered Materials Handbook, Volume 4 "Ceramics and Glasses", by ASM INTERNATIONAL, Copyright ASM INTERNATIONAL 1991, Selection 14, S. 1069, "Sealing Glasses" (by Carl J. Hudecek) zu entnehmen.

In bestimmten Fällen werden dem Komposit-Lotglaspulver auch Zusätze wie ZrO₂, ZrSiO₄ oder TiO₂ zugegeben, die zur gezielten Kristallisation des Lotglaspulvers nach dem Aufschmelzen führen sollen. Solche kristallisierenden Komposit-Lotgläser sind vor allem dort von Vorteil, wo bei der späteren Verwendung eine höhere thermische Belastbarkeit gewünscht ist.

Die wichtigsten Anforderungen an ein Komposit-Lotglas sind eine niedrige Aufschmelztemperatur und die Anpassung der thermischen Ausdehnung an die zu verbindenden bzw. zu beschichtenden Elemente bzw. Materialien über den gesamten Temperaturbereich unterhalb der Einfriertemperatur des Komposit-Lotglases bis Raumtemperatur bzw. Anwendungstemperatur. Die Einfriertemperatur kennzeichnet die Temperatur unterhalb derer es nicht mehr zum Relaxieren von durch unterschiedliche thermische Ausdehnungen verursachten Spannungen kommen kann. Dabei wird die Wärmeausdehnung des Komposit-Lotglases der zu beschichtenden oder zu verbindenden Stücke bzw. Materialien angepaßt. Durch geringfügig unterschiedliche Wärmeausdehnungskoeffizienten kann erreicht werden, daß festigkeitskritische Teile des Verbundes beim Abkühlen unter Druckspannung geraten. Diese Druckspannung kann eine von außen einwirkende Zugspannung kompensieren und so die Festigkeit erhöhen. Bei üblichen Abkühlgeschwindigkeiten liegt die Einfriertemperatur 10 bis 30°C oberhalb der Transformationstemperatur des Lotglases. Weitere wichtige Anforderungen an das Komposit-Lotglas sind gutes Anhaften an die zu verbindenden bzw. zu beschichtenden Materialien, hermetische Abdichtung und hohe Festigkeit des Verbundes.

Die Anpassung der thermischen Ausdehnung über den gesamten Temperaturbereich unterhalb der Einfriertemperatur ist wichtig, um temporäre Zugspannungen zu vermeiden. Bei Fehlanpassungen werden die hervorgerufenen Spannungen die Festigkeit verschlechtern. Bei größerer Fehlanpassung können sofort oder im Laufe der Zeit während des Gebrauchs Risse entstehen, die die hermetische Abdichtung oder den mechanischen Verbund gefährden.

Bekannte Füllstoffe auf der Basis von Bleititanat und von dotierten PbTiO₃-Mischkristallen, bei denen ein Teil des Pb bzw. Ti durch andere Kationen substituiert ist, können bezüglich ihres thermischen Ausdehnungsverhaltens wie folgt charakterisiert werden. Bis zu einer bestimmten Temperatur, der Curietemperatur T_{c}, besitzen sie eine niedrige, oft sogar negative thermische Ausdehnung. Oberhalb dieser Temperatur, bei der auch das ferroelektrische Verhalten verschwindet, haben sie eine positive thermische Ausdehnung. Um diese Unstetigkeit in der thermischen Ausdehnung des Füllstoffes nicht auf das Komposit-Lotglas zu übertragen, ist anzustreben, daß die Einfriertemperatur des Komposit-Lotglases die Curietemperatur des Füllstoffes nicht wesentlich überschreitet. Ansonsten wären größere temporäre Spannungen zwischen Komposit-Lotglas und den zu verbindenden bzw. zu beschichtenden Stücken bzw. Materialien kaum zu vermeiden. Beim reinen PbTiO₃ beträgt die Curietemperatur ca. 490°C. Durch eine Reihe von Kationen-Substitutionen wie z. B. die Substitution des Pb durch Ca wird die Curietemperatur stark abgesenkt. Dies kann solche Kationen-Substitutionen für Komposit-Lotgläser mit höheren Einfriertemperaturen unbrauchbar machen.

Ein weiterer Nachteil der über Kationen-Substitution hergestellten Füllstoffe auf der Basis von PbTiO₃ besteht darin, daß der Substitutionsgrad in weiten Grenzen geändert werden muß, um die thermische Ausdehnung des Füllstoffs zu verändern. Größere Variationen der thermischen Ausdehnung des Füllstoffs sind oft nur möglich, indem die Art der Kationen-Substitution, d. h. das damit verbundene Element geändert wird. Dabei ist wichtig, daß die Zusammensetzung des Füllstoffs immer mit dem im Komposit-Lotglas enthaltenen Glaslot verträglich sein muß. Durch die über die Kationen-Substitution eingeführten neuen Elemente entsteht daher ein zusätzliches Risiko von unerlaubten Reaktionen. Auch von den Anforderungen der Anwendungen oder der Verarbeitung her sind bestimmte Elemente oft nicht erlaubt. So ist z. B. im Kontakt mit Si als Halbleiter oder bei gefordertem hohem elektrischen Isolationsvermögen in der Regel auf Alkaliatome zu verzichten. Weiterhin ist es wirtschaftlich nachteilig, für die Bereitstellung von Füllstoffen, die einen weiten Bereich thermischer Ausdehnungen und Anwendungen abdecken, auf viele verschiedene Kationen zurückzugreifen. Neben logistischen Gründen wie Lagerung, Beschaffung, gegenseitiger Kontaminationsgefahr ist es auch nachteilig, daß die Herstellbedingungen auf die jeweilige Kationen-Substitution angepaßt werden müssen.

Die niedrige thermische Ausdehnung von PbTiO₃ und PbTiO₃-Mischkristallen wird durch die Ausdehnungskoeffizienten der einzelnen Kristallachsen bestimmt. Hierbei zeigt sich oft eine ausgeprägte Anisotropie, so besitzen z. B. im Falle des tetragonalen PbTiO₃ die a-Achsen eine schwache positive thermische Ausdehnung und die c-Achse eine starke negative thermische Ausdehnung. Die aufgrund der Ausdehnungsunterschiede hervorgerufenen Spannungen zwischen Füllstoffteilchen und Lotglas können zu schädlichen Mikrosprüngen führen, die die hermetische Abdichtung und die Festigkeit beeinträchtigen.

Die DE-A 25 48 736 beschreibt die Glaspassivierung von Silizium-Halbleiter-Bauelementen, wobei die hierfür verwendeten Passivierungsgläser eine niedrige Aufschmelztemperatur aufweisen. Ihnen ist gegebenenfalls feinkörniges, undotiertes Bleititanat als Füllstoff zugemischt. Eine Anpassung des Füllstoffes an die thermische Ausdehnung durch Substitution einzelner Kationen bzw. Anionen wird darin nicht beschrieben.

In der japanischen Patentanmeldung JP-A 04-160 035 sind eine Fülle von Kationen-Substitutionen für die Position des Pb- und insbesondere des Ti-Atoms beschrieben. Diese Vielzahl der Substitutionen zeigt, daß Kristalle des PbTiO₃-Typs auf den Kationenplätzen über eine ausgeprägte Fähigkeit zur Mischkristallbildung verfügen. So wird in der genannten Patentanmeldung die Position des Pb zu 5-40 at% durch eines oder mehrere der Elemente Ca, Ba, Sr substituiert. Das Ti-Atom wird zu 5 bis 90 at% substituiert durch Zr, Mg, Co, Zn, Ni, Mn, Sn, Cu, Fe, Al, Bi, Nb, Ta, Sb, Te, V, Mo, W. Das im Komposit-Lot enthaltene Glas besteht aus PbO, V₂O₅, TeO₂ und wahlweise Al₂O₃, ZnO, Nb₂O₅. Die Substitution durch die genannten Kationen erlaubt es, die thermische Ausdehnung des erhaltenen Füllstoffs und seine Curietemperatur einzustellen. Der Einsatz und die individuelle Herstellung der Füllstoffe mit deutlich verschiedener chemischer Zusammensetzung ist jedoch aufwendig und birgt die genannten technischen und wirtschaftlichen Nachteile in sich.

Die DE-A 3712569 beschreibt Kationen-substituierte Füllstoffe der Formel:

(Pb₁₋ₘCaₘ) TiO₃,

worin 0<m≤0,40 sind.

Das bedeutet, daß bis zu 40 at% des Pb durch Ca ersetzt sind. Die Füllstoffe werden eingesetzt zur Verwendung in Abdichtungselementen bei elektronischen Bauteilen. Die Substitution des Pb durch Ca führt zu einer starken Erniedrigung der Curietemperatur, kombiniert mit niedrigen Werten für die thermische Ausdehnung des Füllstoffs. Nachteilig ist das Vorhandensein von Mikrosprüngen nach dem Abdichten im Glas.

Diesen Nachteil der Mikrosprünge versucht die DE-A 3911176 durch eine Füllstoffzusammensetzung zu beheben, die aus 65-75 Gew% PbO, 10-25 Gew% TiO₂, 1-10 Gew% Fe₂O₃, 1-12 Gew% WO₃ und 0-5 Gew% CaO besteht. Bei dieser Zusammensetzung wird das Pb vorzugsweise durch das Ca-Atom substituiert und das Ti bevorzugt durch eine Kombination von Fe und W. Mit Füllstoffen der beanspruchten Zusammensetzung werden in Komposit-Glasloten thermische Ausdehnungskoeffizienten zwischen 3,5 und 5,0 x 10⁻⁶/°C zwischen Raumtemperatur und 250°C, also in einem relativ eingeschränkten Bereich, realisiert. Die Füllstoffe sind besonders zum Erzielen eines niedrigen Ausdehnungskoeffizienten im Komposit-Lotglas geeignet. Die Curietemperatur wird mit der beanspruchten Kationen-Substitution auf Werte um 300°C stark erniedrigt, was die genannten Füllstoffe für viele Komposit-Lotgläser mit höherer Einfriertemperatur unbrauchbar macht.

Die Erfindung hat daher zum Ziel, Füllstoffe für die Verwendung in einem Komposit-Lotglas mit niedriger Aufschmelztemperatur bereitzustellen, die den meisten technischen und wirtschaftlichen Anforderungen genügen. Dabei sollen es die Füllstoff-Zusammensetzungen ermöglichen, die thermische Ausdehnung des Füllstoffs durch kleine Änderungen der chemischen Zusammensetzung einzustellen. Durch diese Änderungen soll jedoch die Curietemperatur nicht wesentlich abgesenkt werden, um die Verwendung in Komposit-Lotgläsern mit unterschiedlichen Einfriertemperaturen zu gewährleisten. Darüber hinaus sollen die bislang üblichen Herstellbedingungen im wesentlichen beibehalten werden können. Ferner sollen die Komposit-Lotgläser auch ein gutes Anhaften an zu verbindende bzw. zu beschichtende Materialien und Gegenstände gewährleisten und keine schädlichen Mikrosprünge ausbilden.

Die Erfindung hat auch zum Ziel, ein Verfahren zur Herstellung eines solchen Füllstoffes bereitzustellen, sowie ein Kompositglas, das einen solchen Füllstoff enthält. Sie betrifft auch dessen Verwendung zur Herstellung elektronischer und elektrischer Vorrichtungen. Diese Aufgabe wird durch einen Füllstoff der oben genannten Art gelöst, der ein dotiertes PbTiO₃ umfaßt, wobei in dem dotierten PbTiO₃ bis zu 35 at% der Pb- und bis zu 35 at% der Ti-Atome durch andere Kationen bildende Atome ersetzt sind und wobei ein Teil der Sauerstoff-Atome durch Halogen-Atome ersetzt sind.

Es hat sich nämlich überraschenderweise gezeigt, daß ein Füllstoff mit den gewünschten Eigenschaften dadurch erhalten werden kann, daß man nicht nur die Kationen bildenden Komponenten, sondern auch den Sauerstoff substituiert.

Dabei wird erfindungsgemäß ein Teil der Sauerstoff-Atome durch Halogen-Atome, insbesondere Fluor, Chlor, Brom, Jod, sowie Pseudohalogenide und/oder Schwefel, wobei Fluor-Atome bevorzugt sind, ersetzt.

Dabei wird erfindungsgemäß von einem dotierten PbTiO₃ - Mischkristall ausgegangen, bei dem bis zu 40 at%, zweckmäßigerweise bis zu 35 at%, und vorzugsweise bis zu 30 at% Pb-Atome und bis zu 40 at%, zweckmäßigerweise bis zu 35 at%, und vorzugsweise bis zu 30 at% der Ti-Atome durch andere Kationen ersetzt sind. Bei einer höheren Substitution von Pb und Ti als 35 at% kann in Einzelfällen der Füllstoff nicht mehr ohne weiteres mit dem Glaslot kompatibel sein. Dies betrifft vor allem die Auflösung der Füllstoff-Teilchen, die Erhöhung der Aufschmelztemperatur und die Förderung einer unkontrollierten Kristallisation. Als untere Grenze der Ti- und Pb-Substitution hat sich 0,1 at% als zweckmäßig erwiesen, wobei jedoch mindestens 1 at% bevorzugt ist.

Kleine Änderungen im Bereich der Anionen-Substitution ermöglichen es, die thermische Ausdehnung des Füllstoffs wie gewünscht einzustellen. Die Curietemperatur wird dabei nicht wesentlich abgesenkt, sondern in der Regel sogar erhöht, was die Verwendung in Komposit-Lotgläsern mit unterschiedlichen Einfriertemperaturen erlaubt. Die geringfügigen Änderungen in der chemischen Zusammensetzung im Bereich der Anionen ermöglichen es, die Herstellbedingungen beizubehalten. Das Anhaften der Komposit-Lotgläser an die zu verbindenden bzw. zu beschichtenden Elemente ist gut und wird durch den Halogen-Zusatz zum Teil sogar verbessert. Mikrosprünge können durch die erfindungsgemäßen Zusammensetzungen vermieden werden.

Die Einstellung der thermischen Ausdehnung des Füllstoffs und dadurch auch der des Komposit-Lotglases erfolgt durch die Höhe des Halogen-Zusatzes bei der Herstellung des Füllstoffs. Bei dem bevorzugt zur Anwendung kommenden Fluor-Zusatz nimmt mit erhöhtem Zusatz auch die thermische Ausdehnung des Füllstoffs kontinuierlich und einstellbar zu. Erhöht man die Substitution der Sauerstoff-Atome durch Fluor um wenige at%, so nimmt die thermische Ausdehnung des Füllstoffs bereits deutlich zu. Damit ist es möglich, die thermische Ausdehnung des Füllstoffs gewünschterweise einzustellen, ohne daß neue Substanzen/Additive eingeführt werden müssen oder sich die Zusammensetzung des Füllstoffs gravierend verändert. Die Verträglichkeit mit dem im Komposit-Lotglas enthaltenen Glas bleibt damit erhalten, ein zusätzliches Risiko von unerlaubten Reaktionen des Füllstoffs mit dem Lotglas wird nicht eingegangen. Auch logistisch ergeben sich Vorteile, da keine zusätzlichen Rohstoffe eingesetzt werden müssen und die Herstellbedingungen beibehalten werden können.

Neben der Erhöhung der thermischen Ausdehnung des Füllstoffs kommt es mit zunehmender Substitution der Sauerstoff-Atome durch Halogen-Atome auch zu einer gleichbleibenden oder sogar zu einer erhöhten Curietemperatur. Dies ist vorteilhaft, weil die Füllstoff-Zusammensetzungen dadurch auch in komposit-Lotgläsern mit höherer Einfriertemperatur eingesetzt werden können.

In dem Ausgangsgemisch zur Herstellung des Füllstoff-Pulvers werden bevorzugt bis zu 18 at%, zweckmäßigerweise bis zu 15 at%, und vorzugsweise bis zu 13 at% der stöchiometrisch benötigten Sauerstoff-Atome durch die oben definierten Halogen-Atome ersetzt. Höhere Gehalte an Fluor- oder anderen Halogen-Atomen bzw. Pseudohalogeniden führen zu unerwünschten Nebenphasen im Füllstoff, da die Aufnahmefähigkeit des PbTiO₃-Mischkristalls begrenzt ist. Es hat sich nämlich gezeigt, daß dabei stabile Fluoride oder Halogenide als Nebenphasen auftreten, die zwar ebenfalls zu der Erhöhung der thermischen Ausdehnung beitragen, jedoch das Risiko von unerwünschten Reaktionen mit dem Lotglas erhöhen. Zwar sind die erfindungsgemäß erwünschten Ziele auch mit niedrigen Halogensubstitutionen erreichbar, jedoch haben sich Mindestmengen von 0,1 at%, insbesondere 0,5 at% als zweckmäßig erwiesen. Vorzugsweise werden mindestens 3 at% substituiert.

Ein besonders günstiges Ausdehnungsverhalten zeigen Füllstoffe, bei denen neben der Anionen-Substitution ein Teil der Pb-Atome durch Mg- und/oder Ca-Atome ersetzt ist. Bevorzugt werden bis zu 30 at% der Pb-Atome substituiert.

Durch die Ca-Substitution wird die thermische Ausdehnung des Füllstoffs erniedrigt. Der Wärmeausdehnungskoeffizient bis zur Curietemperatur ist relativ konstant. Nachteilig ist die starke Absenkung der Curietemperatur.

Bei der Substitution der Pb-Atome durch Mg-Atome wird die Curietemperatur weniger stark abgesenkt. Der Wärmeausdehnungskoeffizient liegt bei Raumtemperatur bei leicht negativen bis positiven Werten und erniedrigt sich mit steigenden Temperaturen bis zur Curietemperatur auf stark negative Werte.

Durch eine kombinierte Mg- und Ca-Substitution im Füllstoff ist es daher möglich, das Ausdehnungsverhalten über die Temperatur einzustellen. Damit kann das gegenläufige Ausdehnungsverhalten vieler PbO-B₂O₃-Lotgläser kompensiert werden. Bei diesen Lotgläsern nimmt der Wärmeausdehnungskoeffizient von Raumtemperatur bis zu ihrer Transformationstemperatur und weiter bis zur Einfriertemperatur zu. Es lassen sich so Komposit-Lotgläser aus PbO-B₂O₃-Lotgläsern und Mg/Ca-substituierten Füllstoffen herstellen, die über einen temperaturunabhängigen Wärmeausdehnungskoeffizienten verfügen, und die an die zu verbindenden oder zu beschichtenden Elemente gut angepaßt sind. Dabei wird das Auftreten temporärer Wärmespannungen verhindert.

Es hat sich gezeigt, daß bei den erfindungsgemäßen Füllstoffen die bekannt gute Substituierbarkeit des Ti-Atoms ebenso ausgenutzt werden kann. Durch Substitution mit einer Kombination aus Fe und W oder Ni und W wird der Wärmeausdehnungskoeffizient des Füllstoffs abgesenkt. Nachteilig sind die erniedrigten Werte für die Curietemperatur. Die Substitution des Ti durch Zr erlaubt es, den Wärmeausdehnungskoeffizienten zu erhöhen.

Mit den erfindungsgemäßen Füllstoff-Zusammensetzungen ist es durch den Ersatz der Sauerstoff-Atome durch Halogen-Atome, vorzugsweise Fluor-Atome, möglich, einen mittleren linearen Wärmeausdehnungskoeffizienten des Füllstoffs zwischen 20 und 300°C von stark negativen Werten bis zu weniger als 2 x 10⁻⁶/K je nach Wunsch zu erhalten. Höhere Wärmeausdehnungskoeffizienten sind nicht sinnvoll, da oberhalb 2 x 10⁻⁶ /K bereits bewährte und kostengünstige Füllstoffe wie Cordierit, Willemit, Mullit, Aluminiumoxid, Zirkon zur Verfügung stehen. Mit β-Eukryptit oder Hochquarz-Mischkristallen kann man auch Füllstoffe realisieren mit einem mittleren linearen Wärmeausdehnungskoeffizienten von ca. -2 x 10⁻⁶ /K, jedoch haben diese Füllstoffe den Nachteil, daß sich das enthaltene Li₂O für Anwendungen, bei denen ein hohes elektrisches Isolationsvermögen gefordert ist, ungünstig auswirkt. Durch die erfindungsgemäße Substitution des Sauerstoffs durch Halogen-Atome, insbesondere Fluor-Atome, wird daher auf wirtschaftlich günstige Weise ein technisch wichtiger Bereich der thermischen Ausdehnung von Füllstoffen abgedeckt.

Die Füllstoffe werden hergestellt aus einem Ausgangsgemisch, das die für die Füllstoffzusammensetzung erforderlichen Bestandteile enthält. Die Bestandteile des Ausgangsgemischs liegen vor als Oxide, Carbonate, Nitrate usw. Die Halogen-Atome werden eingeführt über stabile Verbindungen wie Fluoride, Chloride usw. Die Bestandteile liegen als reaktionsfähiges Pulver vor und werden im Ausgangsgemisch zur Homogenisierung miteinander vermischt. Bei der Herstellung des Füllstoffs über Reaktionssintern wird das pulverförmige Ausgangsgemisch erhitzt und reagiert zu der gewünschten Füllstoffzusammensetzung. Die Reaktion wird meist in geschlossenen oder abgedeckten Tiegeln bzw. Kapseln durchgeführt, um Verdampfungen zu verhindern und eine Kontamination des Ofens durch Blei zu vermeiden. Das Blei wird bevorzugt über Bleimennige eingeführt, weil dies zu einem höheren Oxidationszustand im Reaktionsgemisch verglichen mit Bleiglätte PbO führt, wodurch die Bildung von unerwünschtem reduziertem Pb verhindert werden kann. Auch der Einsatz des seltenen PbO₂ oder das Sintern in Sauerstoffatmosphäre kann die Verdampfung bzw. Reduktion des Pb verringern. Die Reaktion wird bevorzugt bei Temperaturen im Bereich von 800-1250°C durchgeführt, weil hierbei die erforderlichen Prozeßzeiten im wirtschaftlich sinnvollen Bereich von wenigen Stunden liegen. Die genannten Temperaturen sind in üblichen, kommerziellen Öfen erreichbar und die schädliche Verdampfung der Bestandteile ist bei diesen Temperaturen noch beherrschbar.

Für eine gute Reaktivität der Bestandteile im Ausgangsgemisch liegen diese mit ihren mittleren Korngrößen im Bereich einiger µm, z. B. 2 - 12 µm vor. Durch Verdichten des Ausgangsgemisches, z. B. Pelletieren oder Pressen vor dem Reaktionssintern, kann man die Reaktionen beschleunigen und die Verdampfungsverluste verringern.

Einer bei der Herstellung manchmal nicht ganz zu verhindernden Verdampfung von einzelnen Komponenten kann man dadurch entgegenwirken, indem man die zur Verflüchtigung neigenden Elemente oder Verbindungen im Ausgangsgemisch im Überschuß zusetzt. Dadurch ist es möglich, die Verdampfung dieser Komponenten zu kompensieren. Im Falle des Bleis erweist es sich meist als völlig ausreichend, 0,5 bis 3 Gew% im Form von Bleioxid-Verbindungen oder PbF₂ dem Ausgangsgemisch zusätzlich zuzusetzen.

Nach dem Reaktionssintern und Abkühlen wird die erhaltene Füllstoff-Zusammensetzung auf die gewünschte Korngröße aufgemahlen und liegt so zum Einsatz vor. In Fällen, wo es auf eine besonders gute Homogenität des Füllstoffpulvers ankommt, kann nach dem ersten Reaktionssintern und Aufmahlen ein weiteres Erhitzen durchgeführt werden. Durch solche nachfolgenden Temperaturbehandlungen, die sich auch im Bereich von 800-1250°C bewegen, können kleine Unterschiede in der Füllstoffzusammensetzung, z. B. unterschiedliche Verdampfungsraten des Materials vom Rand bzw. aus der Mitte des Reaktionsgemisches, ausgeglichen werden.

Durch zwei- oder mehrmaliges Reaktionssintern lassen sich gut reproduzierbare Füllstoff-Zusammensetzungen und damit gut reproduzierbare Eigenschaften erreichen. In vielen Fällen wird der durch die Zwischenmahlung bedingte höhere Aufwand aber nicht erforderlich sein. Auch bei dieser zweiten Temperaturbehandlung ist es vorteilhaft, das Ausgangspulver vorher zu kompaktieren oder zu pressen, um die Reaktionsprozesse zu beschleunigen und Verdampfungsverluste zu verringern. Um einem möglichen Verdampfen flüchtiger Bleiverbindungen entgegenzuwirken, können auch bei dieser zweiten Temperaturbehandlung entsprechende Verbindungen im Überschuß zugesetzt werden.

Eine zweite Herstellmethode für die erfindungsgemäße Füllstoff-Zusammensetzung führt über die Schmelze. Das Ausgangsgemisch wird dabei auf höhere Temperaturen als beim Reaktionssintern auf ca. 1550°C erhitzt und so aufgeschmolzen. Auch bei dieser Methode ist das Verdampfen von flüchtigen Komponenten, wie z. B. PbO oder PbF₂ durch Abdecken des Schmelztiegels, durch Ausbildung eines kühleren Gemengeteppichs oder andere Maßnahmen zu vermindern. Gegebenenfalls sind die verdampfenden Bestandteile im Überschuß zuzugeben. Die homogene Ausgangsschmelze wird ausgegossen und kristallisiert beim Abkühlen aus. Das Ausgießen kann in Wasser oder auf Metallplatten erfolgen. Nachteilig bei diesem Herstellweg über die Schmelze ist die hohe Aggressivität der Schmelze gegenüber den meisten Tiegelmaterialien. Die kristallisierte Füllstoff-Zusammensetzung wird gegebenenfalls nach einer zusätzlichen Temperaturbehandlung zur gewünschten Korngröße aufgemahlen. Zur Verbesserung der Homogenität kann, wie beim Reaktionssintern, eine zweite Temperaturbehandlung und anschließendes erneutes Aufmahlen durchgeführt werden.

Die Herstellung der erfindungsgemäßen Füllstoffe kann auch über die Fällung aus einer wässrigen Lösung von Ausgangsbestandteilen erfolgen. Geeignete Ausgangsbestandteile sind z. B. gelöste Nitrate oder Fluoride. Die gelösten Ausgangsverbindungen werden durch Änderungen des pH-Wertes, durch chemische Zusätze und/oder durch Temperaturerhöhung ausgefällt. Die so erhaltenen Pulver werden nach dem Filtern gereinigt, getrocknet und einer thermischen Nachbehandlung unterworfen. Danach werden die Pulver auf die gewünschte Korngröße aufgemahlen.

Bei der Herstellung des Komposit-Lotglases wird das Füllstoff-Pulver mit einem Lotglas-Pulver gemischt. Um die Entstehung von schädlichen Mikrorissen im Komposit-Lotglas nach dem Aufschmelzen zu verhindern, besitzt das Füllstoff-Pulver eine mittlere Korngröße, die bevorzugt <15 µm, insbesondere <8 µm betragen sollte. Höhere mittlere Korngrößen sind ungünstig, weil die dadurch hervorgerufenen Spannungen zwischen Füllstoff-Teilchen und Lotglas zu schädlichen Mikrosprüngen führen können, die die hermetische Abdichtung und die Festigkeit beeinträchtigen.

Zur Einstellung der thermischen Ausdehnung des Komposit-Lotglases haben sich Füllstoffmengen bis zu 60 Vol%, insbesondere bis zu 55 Vol%, bezogen auf die Gesamtmenge des Komposit-Lotglases, als zweckmäßig erwiesen. Vorzugsweise werden bis zu 50 Vol% verwendet. Höhere Füllstoffmengen verschlechtern das Fließverhalten des Lotglases und erhöhen damit die Aufschmelztemperatur.

Die erfindungsgemäßen Füllstoff-Zusammensetzungen sind mit bekannten, niedrigschmelzenden Lotgläsern zu verarbeiten. Bewährte Lotgläser mit PbO und B₂O₃ als Hauptbestandteilen sind gut mit den Füllstoffen verträglich. Diese niedrigschmelzenden Lotgläser enthalten fallweise weiter ZnO, SiO₂, Al₂O₃, Bi₂O₃, F und weitere übliche Glaskomponenten, wie z. B. auch Alkalien.

Neben dem niedrigschmelzenden Lotglas und den erfindungsgemäßen Füllstoff-Zusammensetzungen kann das Komposit-Lotglas weitere zusätzliche Komponenten enthalten. Bekannte Füllstoffe wie z. B. Cordierit, β-Eukryptit, Mullit, Willemit, Aluminiumoxid oder Zirkon können einzeln oder in Kombination zugesetzt werden, um ein bestimmtes Ausdehnungsverhalten zu erreichen und/oder um weitere Eigenschaften wie z. B. Festigkeit, Wärmeleitung, elektrische Isolation und/oder dielektrische Eigenschaften gezielt einzustellen.

Kristallisationsfördernde Zusätze wie ZrO₂, ZrSiO₄, TiO₂, kristalline Bleiborat-Verbindungen, kristalline Zink-Verbindungen und/oder bereits kristallisiertes Glaspulver werden zugesetzt, um das Lotglas nach dem Aufschmelzen gezielt zur Kristallisation zu bringen. Wichtig ist, daß die Kristallisation das Aufschmelzen nicht beeinträchtigt, sondern mit einer gewissen Verzögerung nach dem Glattfließen einsetzt. Kristallisierende Komposit-Lotgläser sind vor allem dort von Vorteil, wo bei der späteren Verwendung eine hohe thermische Belastbarkeit gewünscht ist. Die gezielte Kristallisation nach Aufschmelzen des Lotglases wird über Art und Menge der kristallisationsfördernden Zusätze erreicht.

Zur nachfolgenden Substitution der Sauerstoff-Atome durch Halogen-Atome ist es auch möglich, diesen Austausch über die Einwirkung von Säuren wie HF oder HCl vorzunehmen. Auch die Erhitzung in einer halogenhaltigen Atmosphäre kann einen solchen Austausch bewerkstelligen.

Die derart erhaltenen Füllstoffe bzw. Komposit-Lotgäser werden insbesondere zur Herstellung von Geräten und Komponenten in der Elektrotechnik und Elektronik verwendet. Als Beispiele seien hermetische Kapselungen für elektronische Bauelemente, der vakuumdichte Verschluß von Bildschirmröhren oder von Displays bzw. -Anzeigevorrichtungen sowie das Beschichten oder Verbinden von Spezialgläsern genannt.

Die vorliegende Erfindung wird mit Hilfe der folgenden Beispiele weiter verdeutlicht. Tabelle 1 enthält 3 Beispiele für Zusammensetzungen von

niedrigschmelzenden Lotgläsern in Gew% und die dazugehörigen Meßgrößen, wie die thermische Ausdehnung zwischen 20°C und 200°C bzw. 20°C und 250°C, sowie 20°C und 300°C die Transformationstemperatur (Tg in °C), die Dichte und die Erweichungstemperatur (Ew in °C). Die Lotgläser werden in bekannter Weise erschmolzen und die Schmelze wird in Wasser oder zwischen wassergekühlten Metallwalzen zu einem Granulat abgeschreckt. Das Granulat wird auf eine mittlere Korngröße von etwa 5-10 µm vermahlen.

Die Tabelle 2 zeigt 12 Beispiele von Füllstoff-Zusammensetzungen. Bei der Herstellung der Füllstoffe wird das PbO über Bleimennige und das CaO über Kalziumcarbonat eingeführt. MgO wird über MgCO₃ ◆ H₂O eingeführt. Ansonsten werden die aufgeführten Oxide bzw. Halogenid-Verbindungen verwendet. Tabelle 2 zeigt die bei der Herstellung eingesetzten Komponenten in Gew%. Die Herstellbedingungen und die Eigenschaften der Füllstoffe sind ebenfalls aufgeführt. Bei den Beispielen 5 und 10 werden Bleioxid-Verbindungen zusätzlich zugesetzt, um eine Verdampfung dieser Komponenten zu kompensieren. Das Ausgangsgemisch wird in einer Mischmahlung auf eine mittlere Korngröße von 5-10 um aufgemahlen. Die Herstellung der Füllstoffe erfolgt bei den angegebenen Temperaturbehandlungen. Vor dem zweiten Erhitzen wird das Reaktionsgemisch auf mittlere Korngrößen um 5-8µm aufgemahlen. Nach dem Reaktionssintern werden die erhaltenen Füllstoffe auf eine mittlere Korngröße von 3-7µm aufgemahlen. Die Füllstoffe werden durch ihren thermischen Ausdehnungskoeffizienten zwischen 20°C und 200°C bzw. 20°C und 250°C, 20°C und 300°C, 20°C und T_{c} sowie durch die Curietemperatur (T_{c} in °C) gekennzeichnet. Die Bestimmung der thermischen Ausdehnungskoeffizienten und der Curietemperatur erfolgt aus dem Ausdehnungsverhalten über die Temperatur. Zur Bestimmung wird aus dem Pulver vor der letzten Temperaturbehandlung ein Stab vorgepreßt und dieser Preßling wird entsprechend den Angaben beim Erhitzen einer Temperaturbehandlung unterzogen. An dem Füllstoff-Stab werden dann die genannten Meßgrößen mit Dilatometer bestimmt. Die Bestimmung der Curietemperatur von ferroelektrischen Keramiken ist beispielsweise in "Piezoelectric Ceramics"; B. Jaffe, W.R. Cook, H. Jaffe; Academic Press; London; New York; 1971 sowie in "Einführung in die Ferroelektrizität"; A.S. Sonin, B.A. Strukov; Akademie Verlag Berlin; 1974 beschrieben.

Zur Herstellung der Komposit-Lotgläser werden Lotgläser und Füllstoffe entsprechend den Beispielen in Tabelle 3 in den angegebenen Volumenanteilen vermischt. Fallweise werden weitere Füllstoffe und kristallisationsfördernde Zusätze zugegeben. Das so erhaltene Pulvergemisch wird zur Erzielung einer besseren Homogenität und zur Verringerung der Korngröße in einer Mühle, insbesondere einer Kugelmühle auf eine mittlere Korngröße von ca. 3-6 µm vermahlen. Um das Anglasungs- und Fließverhalten zu charakterisieren, wurde das Pulver auf einem Substratglas in einer Höhe von etwa 3 mm in länglicher Form aufgestreut und mit dem Substratglas zusammen in einem Gradientenofen im Bereich zwischen 300° und 600°C für 30 min. erhitzt. Als Substratglas für Komposit-Lote mit entsprechend niedrigem Wärmeausdehnungskoeffizienten wurde zum Beispiel das kommerzielle Glas AF 45 der DESAG (Ausdehnungskoeffizient α_{20/300}=4,5 x 10^{- 6} /K) verwendet. Die Bestimmung des mittleren thermischen Längenausdehnungskoeffizienten (Alpha) wurde immer nach DIN 52 328 und die Bestimmung der Tranformationstemperatur (Tg) wurde immer nach DIN 52 324 durchgeführt. Bei der Begutachtung der Probe von unten durch das Substratglas hindurch ist die Anglasungstemperatur, bei der ein schlüssiger Verbund zwischen Komposit-Lotglas und Substratglas entsteht, gut festzustellen. Die Glattfließtemperatur bezeichnet die Temperatur, bei der das Komposit-Lotglas vollständig glattfließt.

Komposit-Lotglaspulver werden zu einem Stab verpreßt und der erhaltene Preßling wird bei der angegebenen Glattfließtemperatur versintert. Bei den so erhaltenen Komposit-Lotglas-Stäben wurde der thermische Ausdehnungskoeffizient zwischen 20°C und 200°C bzw. 20°C und 300°C gemessen.

Bei dem Beispiel 11 werden 4 Gew% ZrSiO₄ als kristallisationsfördernder Zusatz zugegeben. Das erhaltene Komposit-Lotglas fließt wie gewünscht zunächst glatt und kristallisiert anschließend.

Die Beispiele 1, 2 und 3 zeigen, wie über die Variation des Fluor-Zusatzes bei der Herstellung des Füllstoffs der thermische Ausdehnungskoeffizient des Füllstoffs und der des Komposit-Lotglases in weiten Grenzen eingestellt werden kann. Durch Variation des Verhältnisses von Lotglas und Füllstoff im Komposit-Lotglas kann der thermische Ausdehnungskoeffizient weiterhin verändert und angepaßt werden (Beispiel 3 und 4). Die Komposit-Lotglas-Pulver der Beispiele 1 und 4 wurden unter Zusatz von Siebdrucköl auf Fichtenölbasis zu einer Siebdruckpaste verarbeitet. Mit den erhaltenen Pasten wurden verschiedene Glassubstrate im einfachen und im zweifachen Siebdruck bedruckt. Das Pulver aus Beispiel 1 wurde vollflächig auf BOROFLOAT 40 aufgedruckt. BOROFLOAT 40 ist ein Borosilicatglas mit einer thermischen Ausdehnung zwischen 20°C und 300°C von 4,0 x 10⁻⁶/K. Das Komposit-Lotglas-Pulver aus Beispiel 4 wurde in gleicher Weise auf ein Substratglas D 263 vollflächig aufgedruckt. D 263 ist ein Glas der DESAG mit einer thermischen Ausdehnung zwischen 20°C und 300°C von 7,3 x 10⁻⁶/K. Die vollflächig erhaltenen Siebdruckmuster mit einer bedruckten Fläche von 30 x 55 mm² wurden in einem Kammerofen bei 510°C und 30 Min. eingebrannt. Die Schichtdicke nach dem Einbrand betrug ca. zwischen 100 bis 175 µm. Die Schichten zeigten gute Haftung und sind nach visueller Beurteilung und Untersuchung unter dem Mikroskop frei von schädlichen Mikrosprüngen.

Die gemessenen Werte zeigen, wie über die Höhe des Fluor-Zusatzes bei der Herstellung des Füllstoffes die Anpassung an unterschiedliche Glassubstrate erreicht werden kann. Die Bedingungen bei der Herstellung der Füllstoffe, der Komposit-Lotgläser und der Beschichtungen können ansonsten im wesentlichen beibehalten werden.

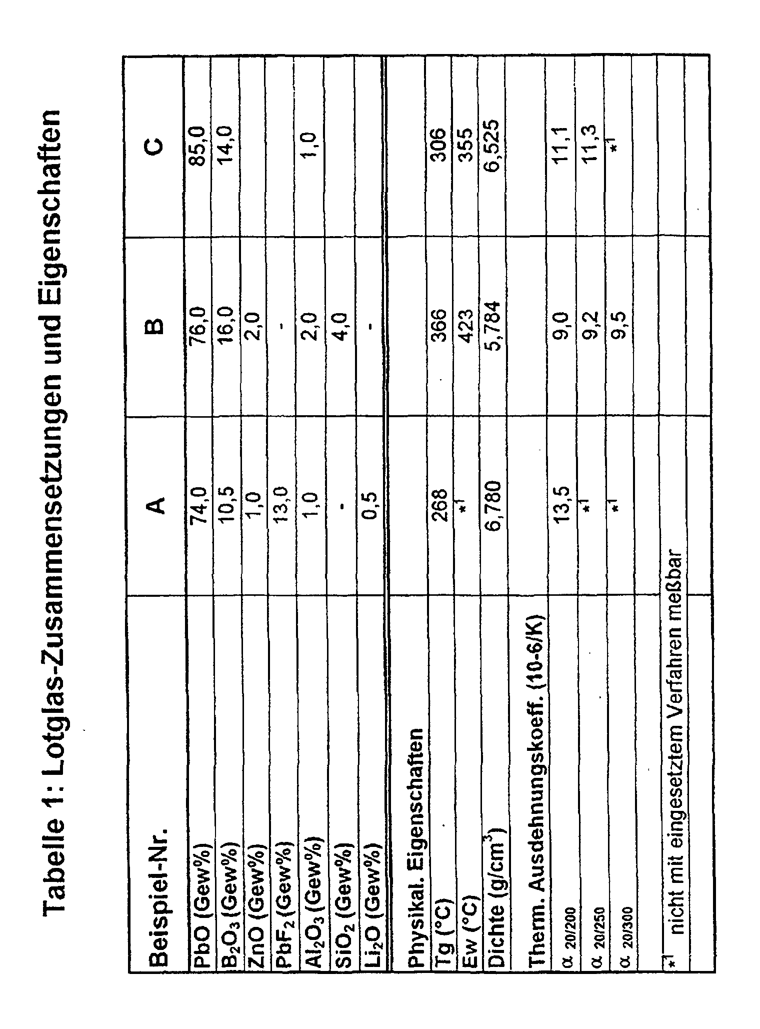

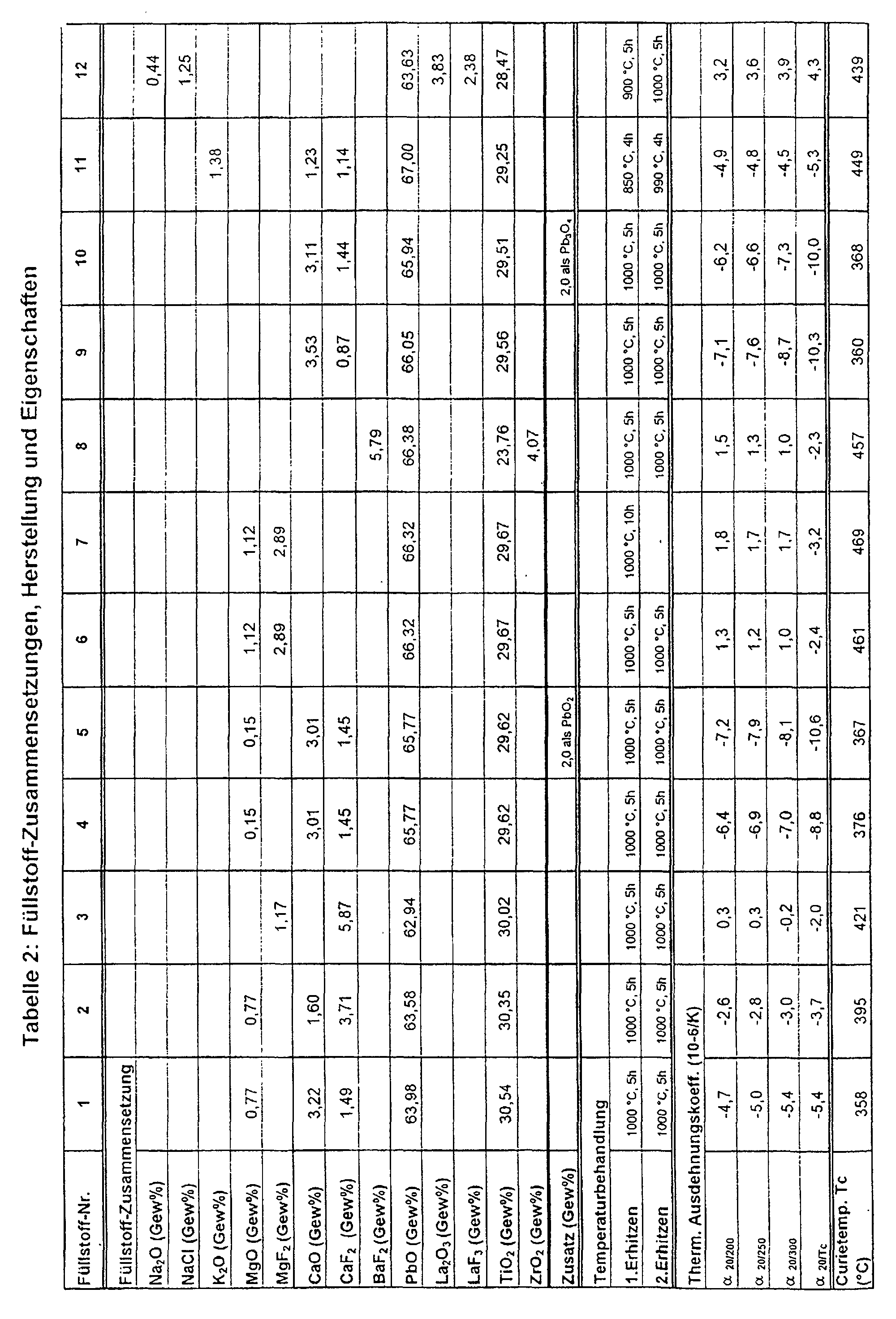

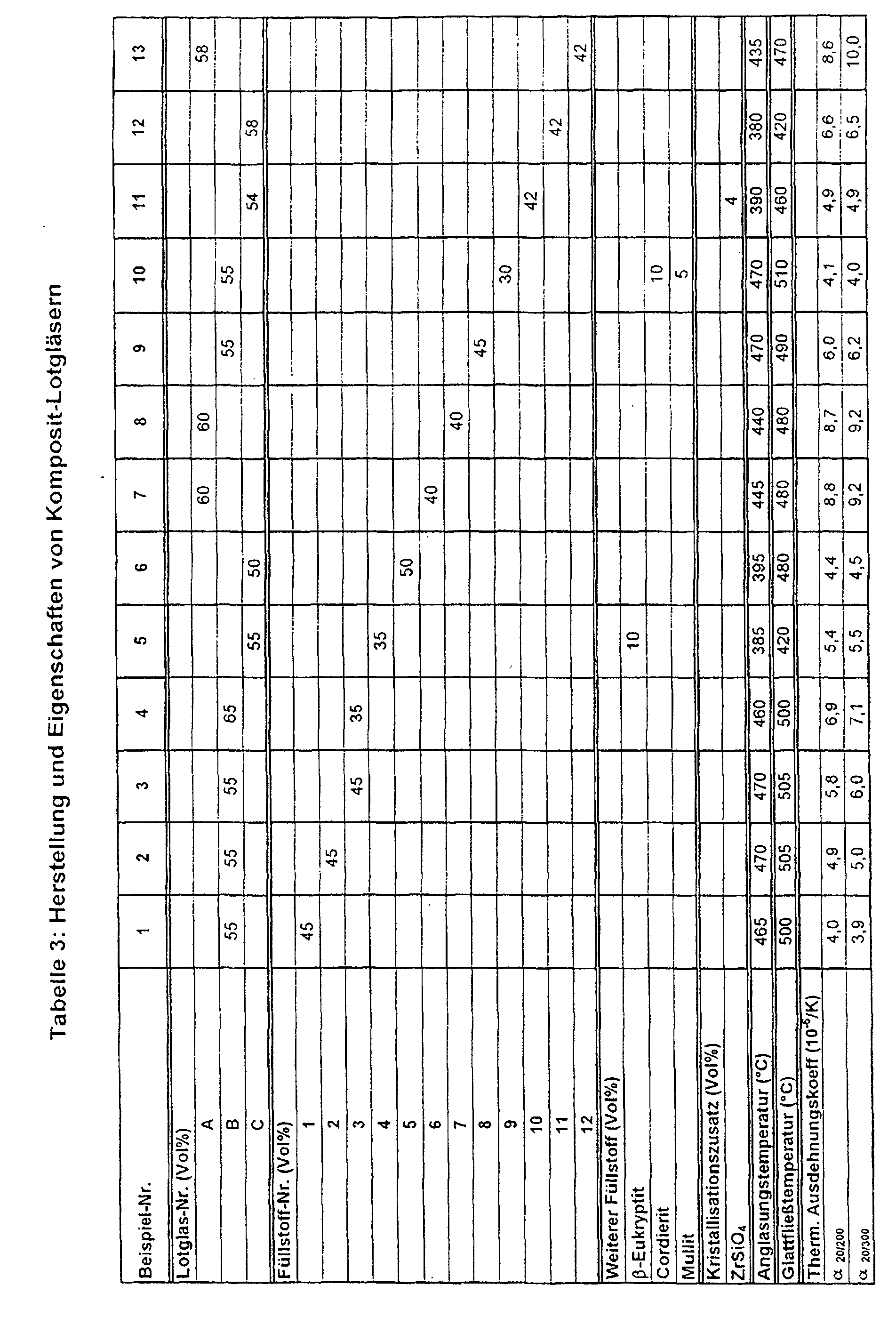

## Patentansprüche

1. Füllstoff für ein Komposit-Glas mit niedriger Aufschmelztemperatur, der ein dotiertes PbTiO₃ enthält, **dadurch gekennzeichnet, daß** er eine homogene Zusammensetzung aufweist, in der bei dem dotierten PbTiO₃ bis zu 35 at% der Pb- und bis zu 35 at% der Ti-Atome durch andere Kationen bildende Atome ersetzt sind und in der ein Teil der O-Atome durch Halogenatome ersetzt ist.

2. Füllstoff nach Anspruch 1, **dadurch gekennzeichnet, daß** das Halogenatom ein Fluoratom ist.

3. Füllstoff nach einem der Ansprüche 1 oder 2, **dadurch gekennzeichnet, daß** bis zu 15 at% der Sauerstoff-Atome durch Fluor-Atome ersetzt sind.

4. Füllstoff nach mindestens einem der Ansprüche 1 bis 3, **dadurch gekennzeichnet, daß** bis zu 30 at% der Pb-Atome durch Mg- und/oder Ca-Atome ersetzt sind.

5. Füllstoff nach mindestens einem der Ansprüche 1 bis 4, **dadurch gekennzeichnet, daß** der Füllstoff eine mittlere Korngröße ≤15 µm aufweist.

6. Füllstoff nach einem der Ansprüche 1 bis 5, **dadurch gekennzeichnet, daß** der mittlere lineare Wärmeausdehnungskoeffizient zwischen 20 und 300°C kleiner als 2x10⁻⁶ /K ist.

7. Komposit-Lotglas, enthaltend ein Lotglas und einen Füllstoff nach einem der Ansprüche 1 bis 6.

8. Komposit-Lotglas nach Anspruch 7, **dadurch gekennzeichnet, daß** es bezogen auf die Gesamtmenge des Komposit-Lotglases bis zu 60 Vol% an Füllstoff enthält.

9. Komposit-Lotglas nach einem der Ansprüche 7 oder 8, **dadurch gekennzeichnet, daß** es ein niedrig aufschmelzendes Glas mit PbO und B₂O₃ als Hauptbestandteile enthält.

10. Komposit-Lotglas nach einem der Ansprüche 7 bis 9, **dadurch gekennzeichnet, daß** es zusätzliche Füllstoffe enthält.

11. Komposit-Lotglas nach einem der Ansprüche 7 bis 10, **dadurch gekennzeichnet, daß** es kristallisationsfördernde Zusätze enthält.

12. Verwendung von Füllstoffen nach einem der Ansprüche 1 bis 6 und/oder Komposit-Lotgläsern nach einem der Ansprüche 7 bis 11 zum hermetischen Abdichten, Löten und Beschichten von Einzelteilen aus Glas, Glaskeramik, Keramik und Metall zur Herstellung von Geräten und Komponenten der Elektrotechnik und Elektronik, für hermetische Kapselungen für elektronische Bauelemente, vakuumdichte Verschlüsse von Bildschirmröhren oder von Display-Anzeigevorrichtungen, sowie zum Beschichten und Verbinden von Spezialgläsern.

13. Verfahren zur Herstellung eines Füllstoffes nach einem der Ansprüche 1 bis 6, **dadurch gekennzeichnet, daß** man das Pulvergemisch bei der Herstellung des Füllstoffes über Reaktionssintern bei Temperaturen von 800°C - 1250°C ein- oder mehrmals erhitzt.

14. Verfahren nach Anspruch 13, **dadurch gekennzeichnet, daß** man Pb- und/oder F-haltige Verbindungen im Überschuß zusetzt.

## Claims

1. Filler for a composite glass with a low melting temperature, which contains a doped PbTiO₃, **characterized in that** it has a homogeneous composition in which, in the doped PbTiO₃, up to 35 atomic % of the Pb atoms and up to 35 atomic % of the Ti atoms are replaced by other cation-forming atoms and in which some of the O atoms are replaced by halogen atoms.

2. Filler according to Claim 1, **characterized in that** the halogen atom is a fluorine atom.

3. Filler according to one of Claims 1 and 2, **characterized in that** up to 15 atomic % of the oxygen atoms are replaced by fluorine atoms.

4. Filler according to at least one of Claims 1 to 3, **characterized in that** up to 30 atomic % of the Pb atoms are replaced by Mg and/or Ca atoms.

5. Filler according to at least one of Claims 1 to 4, **characterized in that** the filler has a mean grain size of ≤15 µm.

6. Filler according to one of Claims 1 to 5, **characterized in that** the mean coefficient of linear thermal expansion between 20 and 300°C is less than 2x10⁻⁶/K.

7. Composite solder glass, comprising a solder glass and a filler according to one of Claims 1 to 6.

8. Composite solder glass according to Claim 7, **characterized in that** it contains up to 60% by volume of filler, based on the total quantity of composite solder glass.

9. Composite solder glass according to one of Claims 7 and 8, **characterized in that** it contains, as its main constituent, a low-melting glass comprising PbO and B₂O₃.

10. Composite solder glass according to one of Claims 7 to 9, **characterized in that** it contains additional fillers.

11. Composite solder glass according to one of Claims 7 to 10, **characterized in that** it contains crystallization-promoting additives.

12. Use of fillers according to one of Claims 1 to 6 and/or composite solder glasses according to one of Claims 7 to 11 for the hermetic sealing, soldering and coating of individual parts made from glass, glass-ceramic, ceramic and metal, for the production of appliances and components used in electrical engineering and electronics, for hermetic incapsulations for electronic components, vacuum-tight closures for picture tubes or for display devices, and for coating and joining special glasses.

13. Process for producing a filler according to one of Claims 1 to 6, **characterized in that**, during the production of the filler by reaction sintering, the powder mixture is heated one or more times at temperatures from 800°C to 1250°C.

14. Process according to Claim 13, **characterized in that** Pb-containing compounds and/or F-containing compounds are added in excess.

## Revendications

1. Charge pour un verre composite présentant une basse température de fusion, laquelle contient un PbTiO₃ dopé, **caractérisée en ce qu'**elle présente une composition homogène dans laquelle pour le PbTiO₃ dopé jusqu'à 35% en atome des atomes de Pb et jusqu'à 35% en atome des atomes de Ti sont remplacés par d'autres atomes formant des cations et dans laquelle une partie des atomes d'O est remplacée par des atomes d'halogène.

2. Charge selon la revendication 1, **caractérisée en ce que** l'atome d'halogène est un atome de fluor.

3. Charge selon l'une quelconque des revendications 1 ou 2, **caractérisée en ce que** jusqu'à 15% en atome des atomes d'oxygène sont remplacés par des atomes de fluor.

4. Charge selon au moins l'une quelconque des revendications 1 à 3, **caractérisée en ce que** jusqu'à 30% en atome des atomes de Pb sont remplacés par des atomes de Mg et/ou par des atomes de Ca.

5. Charge selon au moins l'une quelconque des revendications 1 à 4, **caractérisée en ce que** la charge présente une grosseur de grain moyenne < 15 µm.

6. Charge selon l'une quelconque des revendications 1 à 5, **caractérisée en ce que** le coefficient moyen de dilatation linéaire entre 20 et 300°C est inférieur à 2 x 10⁻⁶/K.

7. Verre de soudage composite contenant un verre de soudage et une charge selon l'une quelconque des revendications 1 à 6.

8. Verre de soudage composite selon la revendication 7, **caractérisé en ce qu'**il contient jusqu'à 60% en volume de charge par rapport à la quantité totale du verre de soudage composite.

9. Verre de soudage composite selon l'une quelconque des revendications 7 ou 8, **caractérisé en ce qu'**il contient un verre à bas point de fusion avec du PbO et du B₂O₃ comme constituants principaux.

10. Verre de soudage composite selon l'une quelconque des revendications 7 à 9, **caractérisé en ce qu'**il contient des charges supplémentaires.

11. Verre de soudage composite selon l'une quelconque des revendications 7 à 10, **caractérisé en ce qu'**il contient des additifs favorisant la cristallisation.

12. Utilisation de charges selon l'une quelconque des revendications 1 à 6 et/ou de verres de. soudage composites selon l'une quelconque des revendications 7 à 11 pour étancher hermétiquement, souder et revêtir des pièces détachées en verre, en céramique de verre, en céramique et en métal pour la fabrication d'appareils et de composants de l'électrotechnique et de l'électronique, pour des blindages hermétiques pour des composants électroniques, pour des fermetures étanches au vide de tubes cathodiques à écran ou de dispositifs de visualisation pour affichage, ainsi que pour revêtir et liaisonner des verres spéciaux.

13. Procédé de préparation d'une charge selon l'une quelconque des revendications 1 à 6, **caractérisé en ce que** l'on chauffe le mélange de poudres une fois ou plusieurs fois à des températures de 800°C à 1250°C lors de la préparation de la charge par frittage-réaction.

14. Procédé selon la revendication 13, **caractérisé en ce qu'**on ajoute en excès des composés contenant du Pb et/ou du F.
